# EUROPEAN PATENT APPLICATION

(11) **EP 0 989 221 A2**
(43) Date of publication of application: **29.03.2000**
(21) Application number: 99306380.9
(22) Date of filing: 12.08.1999
(51) Int. Cl.: D04H 1/00

(54) **Breathable molded structure**

(30) Priority: 22.09.1998 US 158230
(71) Applicant: Tietex International Ltd., Spartanburg, South Carolina 29301 (US)
(72) Inventor: Hardegree, Mike, Spartanburg, South Carolina 29302 (US); Wildeman, Martin, Spartanburg, South Carolina 29302 (US)
(74) Representative: McNeight, David Leslie

(57) **Abstract**

A molded fabric article that is particularly well suited for use as a filter casing in vacuum cleaners is disclosed. The molded fabric article is made from a nonwoven web containing binder fibers. If desired, the web can also contain fibers having a higher melting point than the binder fibers. Once subjected to heat and pressure, the binder fibers allow the nonwoven web to be molded into a desire shape. For instance, in one embodiment, the nonwoven web can be formed into a casing for vacuum cleaners. If desired, a face fabric can be laminated to the casing in order to improve the appearance of the casing.

## Description

The present invention is generally directed to a molded, air permeable fabric that is particularly well suited for functioning as a filter casing for a vacuum cleaner. The present invention is also directed to a process of making the filter fabric.

A vacuum cleaner filter primarily functions to collect dirt and dust through suction. Thus, air must be able to circulate through the filter to provide the suction necessary for the vacuum cleaner to collect any dirt.

In the past, vacuum cleaners had soft outer bags made of fabrics or perforated vinyl membranes that were breathable. The bags were placed on upright vacuum cleaners and attached in a manner that allowed air to flow through the filter. The direct flow of air through this breathable bag system gave good filtration efficiency when used either alone, or in conjunction with a paper inner-bag that served as the primary filter.

However, recently, flexible fabric and vinyl filter bags have become increasingly replaced by the modern hard shell housings produced by injection molding. Hard shell housings have become popular due to their contemporary appearance and the perceived value of the hard shell housings.

Today, vacuum cleaners made with these "hard side" bags generally have a paper bag that serves as the primary filter, which is encased within the hard shell housing. The housing is made with rigid plastics, such as polystyrene, which give the vacuum cleaner casings a modern, aesthetic look. Although the modern look of these hard shell housings is desirable, however, the "hard side" bags exhibit several weaknesses over the fabric bags used in the past.

One such weakness is that "hard side" bags are not air permeable and do not breathe, resulting in poor efficiency and performance of the vacuum cleaner. Due to the nature of polystyrene and other hard plastics, vacuum cleaners made with hard shell casings require elaborate systems to permit air flow through the filter. Typically, holes are created on the sides of the housing to allow some air flow through the vacuum cleaner. However, because only a small portion of the housing permits air flow, the vacuum cleaner is less efficient in providing suction and generally requires a larger motor in order to compensate for the poor efficiency. Further, these larger motors can generate a louder noise during use, which is also undesired by consumers.

Still another weakness of vacuum cleaners made with "hard side" bags is that the vacuum cleaners are heavy, and are not "furniture friendly." Due to the weight and rigidity of hard plastics, vacuum cleaners made with harder casings are difficult to maneuver, and when bumped against furniture, can cause significant damage. Moreover, "hard side" bags have shiny surfaces, which, when bumped against furniture, are easily scratched and scuffed.

As such, a need currently exists for an improved vacuum cleaner filter casing. In particular, a need exists for an aesthetic vacuum cleaner casing that can be molded into the same shapes as the plastic "hard side" bags, while still retaining the breathability properties of a fabric so that the filtration and performance of the cleaner will be similar or better than past fabric bags.

The present invention recognizes and addresses the foregoing disadvantages and others of prior art constructions and methods.

Accordingly, it is an object of the present invention to provide an improved molded fabric that is suitable for use as a filter casing for vacuum cleaners.

Another object of the present invention is to provide a filter casing made from a nonwoven web.

Still another object of the present invention is to provide a filter casing made from a nonwoven web comprising binder fibers that are moldable when exposed to heat and pressure.

Still another object of the present invention is to provide a filter casing made from a nonwoven web containing binder fibers and having a permeability of at least 10 cubic feet per minute.

Still another object of the present invention is to provide a filter casing made from a nonwoven web containing binders fibers as well as fibers that have a higher melting point than the binder fibers.

These and other objects of the present invention are achieved by providing a process for producing a molded nonwoven fabric that is particularly well suited for use as a vacuum cleaner filter housing. The process includes the steps of providing a nonwoven web of fabric containing binder fibers, and possibly other fibers. The nonwoven web is heated to a temperature sufficient to cause the binder fibers to melt or soften, and fuse together or to other fibers present in the nonwoven web.

In accordance with the present invention, after or during heating the nonwoven web, the web can be pressed and trimmed into a desired shape. The filter casing may also include an outer covering, which can be adhered to the nonwoven web during heating and/or during molding with the use of an adhesive film.

The binder fibers used to make the nonwoven web can be made from monocomponent or bicomponent fibers having a melting point below about 350°F. In particular, binder fibers of the present invention have a melting point below about 240°F, and preferably below about 150°F. In one embodiment, the binder fibers are made from polyester. However, various other materials such as polypropylene or polyethylene can be used. In general, the binder fibers should be of sufficient size so that the formed fibers are moldable and rigid. In particular, binder fibers of the present invention have a denier between about 1.5 and 15, and in one embodiment at a denier of about 3.

As described above, besides binder fibers, the nonwoven web of the present invention can also contain other fibers with a higher softening point. For instance, the higher melting point fibers can be made from polyester, polyethylene, or polypropylene. Preferably, the fibers are made from polyester, and in one embodiment of the present invention, have a melting point from about 475°F to 490°F. In general, fibers that form the high melt portion of the nonwoven web have a denier of from about 1.5 to about 15, and in one embodiment have a denier of about 6.

One important aspect of the present invention is that the moldable fabric is breathable. For example, a filter casing made in accordance with the present invention can have a permeability of at least 10 cubic feet per minute, particularly between about 10 to about 100 cubic feet per minute, and in one embodiment a permeability of about 10 to about 35 cubic feet per minute.

Other objects, features and aspects of the present invention are discussed in greater detail below.

A full and enabling disclosure of the present invention, including the best mode thereof, directed to one of ordinary skill in the art, is set forth more particularly in the remainder of the specification, which makes reference to the appended figures in which:
Figure 1 is a perspective view of a vacuum cleaner including a fabric casing made in accordance with the present invention;
Figure 2 is a perspective view of a molded fabric laminate made in accordance with the present invention; and
Figure 3 is a perspective view with cutaway portions of a fabric laminate made in accordance with the present invention.

Repeat use of reference characters in the present specification and drawings is intended to represent same or analogous features.

It is to be understood by one of ordinary skill in the art that the present discussion is a description of exemplary embodiments only, and is not intended as limiting the broader aspects of the present invention, which broader aspects are embodied in the exemplary construction.

In general, the present invention is directed to an air permeable, molded fabric particularly well suited for use as a filter casing in vacuum cleaners. The fabric of the present invention includes a substrate made from a nonwoven web, comprised of low melt thermoplastic fibers, and in one embodiment, fibers with a higher melting point than the binder fibers contained within the web.

The filter casing of the present invention offers many advantages over prior art constructions used in vacuum cleaners. For example, the fabric is not only light and soft, but is also moldable. Thus, the fabric of the present invention can be molded into various distinctive shapes for improving the appearance of the vacuum cleaner.

As opposed to using hard plastic casings, the breathable and moldable fabric casing of the present invention can be a much better noise insulator for reducing noise levels during operation of the vacuum cleaner. Further, since the moldable fabric of the present invention is breathable, filter casings made from the fabric are much more efficient than nonpermeable hard plastic casings. Consequently, smaller motors may be used in vacuum cleaners containing the fabric casing of the present invention.

Another advantage of the fabric casing of the present invention is that the fabric casing is much more furniture friendly than hard plastic casings used in the past. In particular, the moldable fabric of the present invention will not dent or scratch furniture when accidentally bumped into the furniture. Furthermore, unlike the shiny outer layer of "hard side bags", a moldable fabric of the present invention will not itself scratch or scuff when bumped against furniture.

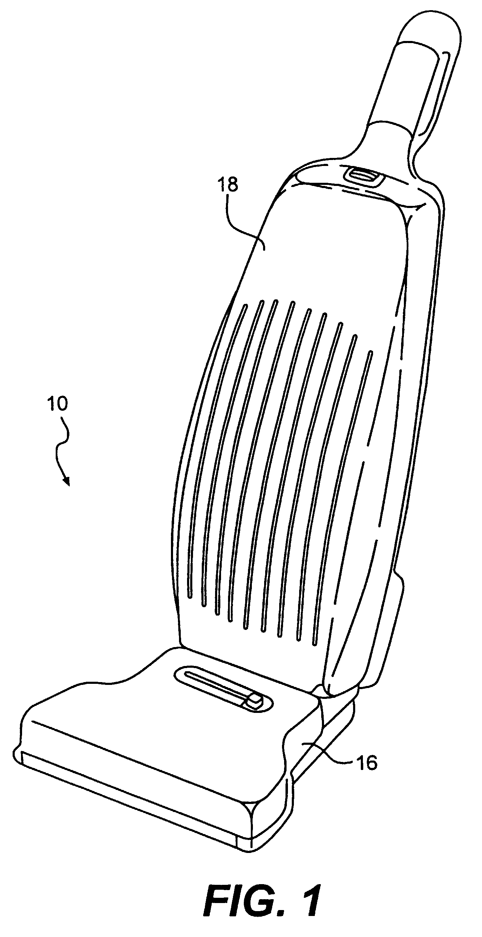

As described above, the fabric of the present invention is primarily useful as a filter casing for vacuum cleaners. Referring to Figure 1, a general vacuum cleaner 10 is illustrated. As shown, attached to the vacuum cleaner 10 is a filter casing 18 made in accordance with the present invention. The vacuum cleaner 10 possesses a motor 16 that circulates air through the filter casing 18. The circulation of air creates a suction force, which allows the vacuum cleaner 10 to collect dirt from a surface.

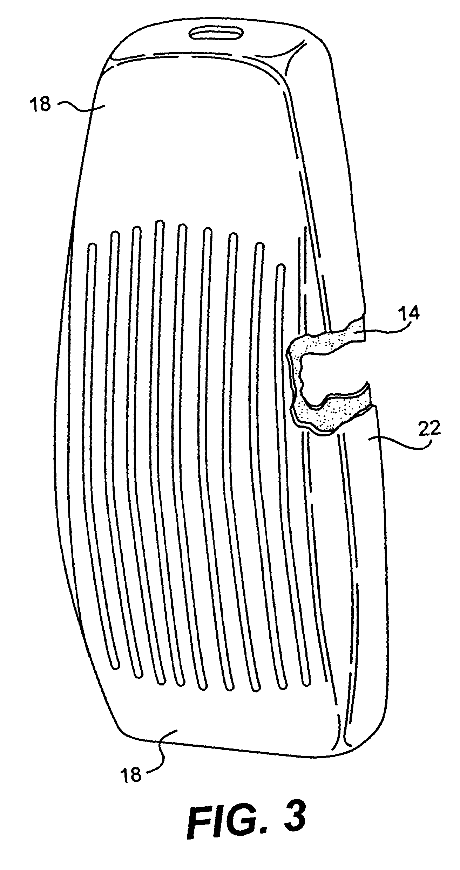

Referring to Figure 3, a filter casing 18 of the present invention comprises a substrate made from a nonwoven web 14 and can also include a face fabric 22 to give the filter casing 18 a decorative look.

The substrate 14 of the present invention contains low melt thermoplastic fibers, or binder fibers, and can also comprise other thermoplastic fibers that have a higher melting point than the binder fibers contained within the nonwoven web 14. When heated, the binder fibers fuse together with other binder fibers or with any other higher melting fibers found within the web, to give the nonwoven web its rigid and moldable character.

Binder fibers used in the present invention may contain polyester, polyethylene, polypropylene, or any combination thereof. In a preferred embodiment of the present invention, the binder fibers are made from polyester. In general, the above mentioned binder fibers have a melting point below 350°F. In particular, binder fibers of the present invention have a melting point below 240°F, and preferably below 150°F. In one embodiment of the present invention, the binder fibers have a melting point between about 75°F and about 110°F. In another embodiment of the present invention, the binder fibers have a softening point between about 75°F and about 80°F.

A substrate 14 of the present invention may contain binder fibers that are either monocomponent or multicomponent, such as bicomponent fibers. Monocomponent fibers contain only one polymer, while bicomponent fibers contain two polymers that are bound in a sheath-core or side-by-side formation.

The moldability and rigidity (ability to maintain a mold) of filter casing 18 of the present invention is primarily dependent on the size and amount of binder fibers contained within the nonwoven web 14. As such, any size or composition of binder fibers may be used in the present invention, as long as the characteristics of the binder fibers are sufficient to make the nonwoven web 14 moldable and rigid.

For most embodiments of the present invention, binder fibers generally comprise between about 20% to about 100% of the nonwoven web 14. In a preferred embodiment of the present invention, binder fibers comprise about 40% to about 60% of the nonwoven web 14.

Also, fibers having a lower denier, or fiber size, will more evenly distribute throughout the nonwoven web 14 and will provide web 14 with a more uniform density and better filtration properties. In this regard, the denier of most binder fibers that are used to make the web 14 preferably is less than 15 and can range from about 1.5 to about 15. In one embodiment of the present invention, the binder fibers have a denier of about 6.

In addition to binder fibers, a nonwoven web 14 of the present invention may also contain other fibers that have higher melting points than the binder fibers contained within the web 14. These fibers are generally used when an increase in the rigidity of the filter casing 18 is desired. These additional fibers can also be used to adjust the permeability and/or filtration properties of the web.

For most embodiments of the present invention, the other fibers are made from synthetic polymers that have a melting point of at least about 350°F. In one embodiment of the present invention, the higher melting point fibers are polyester and have a melting point from about 475°F to about 490°F. The denier of the higher melting point fibers can also vary, from about 1.5 to about 15. As stated above, smaller deniers will generally lead to better filtration properties and more uniform web formation and will provide the resulting fabric with a softer hand. Thus, in one embodiment, the higher melting point fibers added to the nonwoven web can have a denier that is equal to or less than the denier of the binder fibers. In a preferred embodiment, when the binder fibers have a denier of about 6, higher melting point fibers can be added to the web having a denier of about 3.

The nonwoven web of the present invention can be formed by any manner known in the art. One such method for producing the nonwoven web is by carding. In forming the web, a batt of fibers, including low melt and high melt fibers, can be carded into a web. A carding machine will generally position the fibers parallel to each other and will align the fibers in the machine direction. If desired, the nonwoven web can be cross-folded in order to increase the thickness and basis weight of the web. Once cross folded, the web may then be needle punched to convert the layers of the web into a coherent, nonwoven fabric. Specifically, needles are punched into the web causing fiber entanglement to occur between the various layers.

Besides being carded and/or needle punched, the nonwoven web of the present invention may also be formed by stitchbonding. Stitchbonding is a process in which multiple rows of barbed, threaded or non-threaded needles are punched through the web, causing fiber entanglement. As opposed to needle punching, the barbed needles can form rows of knit-like loops into the fabric. For instance, in one embodiment, the needles pick up fibers after being punched into the web and move the fibers along the web to the point of the next penetration. Stitchbonding machines that are typically used in these processes are commonly referred to as fleece-knit, malivlies, or malifleece machines.

Another process that is suitable in forming the nonwoven web 14 is spundbonding. Spunbonding is a process in which nonwoven fabrics are formed by fibers that have been extruded, and then drawn from a die onto a continuous belt. The laid fibers are then bonded using various methods, such as using hot-roll calendering, point bonding, hydroentangling, through air bonding, or by passing the web through a saturated steam chamber at an elevated pressure.

Any of the above mentioned methods, as well as other methods of making nonwoven webs, are suitable for producing the substrate 14 of the present invention. In general, it is preferred that the nonwoven web 14 of the present invention be produced by carding, and in particular, carding followed by a needle punching process.

Referring again to Figure 3, in one embodiment of the present invention, a face fabric 22 can also be applied to the substrate 14. Substrates of the present invention that contain bicomponent fibers cannot usually be dyed. Thus, to give the filter casing 18 a decorative look, an outer covering, or face fabric 22, can be molded over the substrate 14. In general, a face fabric 22 can be any fabric or material that is moldable or stretchable. For instance, in one embodiment, a stitch bonded nonwoven fabric can be used as the face fabric. Alternatively, the face fabric can be a knitted or woven fabric, such as a "loop hole" fabric. The face fabrics are used only as decorative aids, and generally do not affect either the permeability or filtration properties of the filter casing 18.

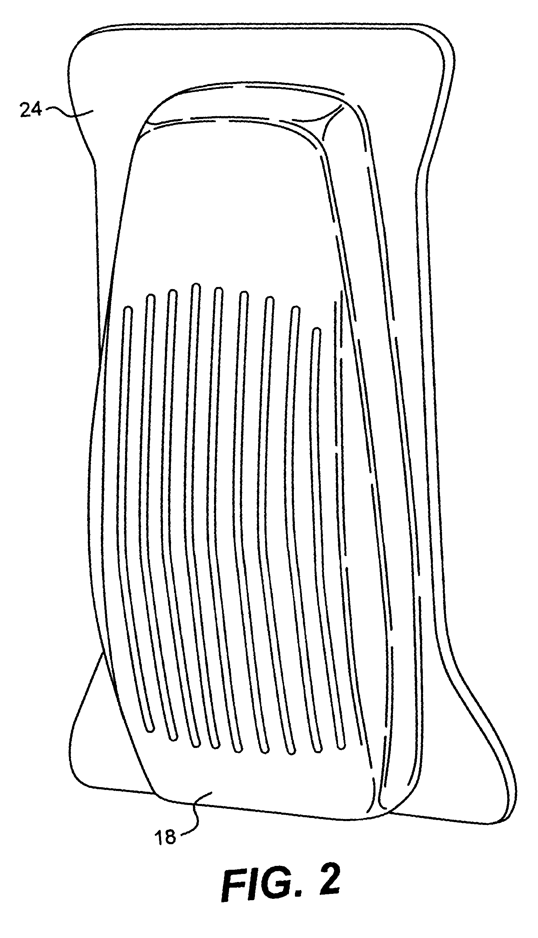

Referring to Figure 2, a filter fabric casing 18 that has been molded according to the present invention is shown. In general, a filter casing 18 is produced by a molding process that comprises heating the nonwoven web 14, with or without a face fabric 22, and then shaping the heated web 14 into filter casing 18 using, for instance, a cold press.

In one embodiment of the present invention, the web 14 is preheated with a thru-air heater to the softening temperature of the binder fibers causing the binder fibers to soften and allowing the web as a whole to be manipulated into the desired shape.

Once heated, the web 14 is then put into a cold press mold. In the cold press mold, the nonwoven web 14 is chilled and pressed into the desired shape with clamps. As the fabric is pressed, fusion occurs at points where the binder fibers cross over themselves or other fibers. This fusion of the binder fibers creates a rigid fabric at normal temperatures. Thus, the rigidity of the filter casing depends on the amount of binder fibers used, as well as the amount of compression applied to the fabric.

In one embodiment of the present invention, the face fabric 22 can be applied during the heating step of the molding process mentioned above. The nonwoven web 14, along with the face fabric 22, are simultaneously heated causing the face fabric 22 to laminate to the substrate 14.

When laminating the face fabric 22 to the substrate 14, an adhesive film may be used to secure the layers together. An adhesive film of the present invention can be made from, for instance, polyester, polypropylene, polyethylene, or any mixtures thereof.

Referring again to Figure 2, after the face fabric 22 has been applied to the substrate 14 and then molded in a cold press, the fabric casing 18 can then be stamped and die-cut to form the desired part, as depicted in Figure 3. In general, the outer layers 24 of the fabric casing 18 are trimmed in the process, which generally takes less than 30 seconds. In one embodiment of the present invention, holes can also be cut into the molded fabric casing 18 to give the filter casing increased air permeability.

A filter casing 18 produced according to the present invention has at least a permeability of 10 cubic feet per minute. In particular, the filter casing 18 has a permeability of 10 to 100 cubic feet per minute (as measured by the Frazier air permeability test). In one embodiment of the present invention, the filter casing 18 has a permeability of 10 to 35 cubic feet per minute.

The basis weight of nonwoven webs made in accordance with the present invention can also vary without substantially effecting the permeability of the web. For most applications, nonwoven web 14 can have a basis weight of from about 10 to about 30 ounces per square yard, and particularly from about 16 to about 22 ounces per square yard.

Besides having high permeability, filter casings 18 of the present invention also retain good filtration properties. In general, a nonwoven web 14 made from fibers with a small particle size, or denier, will result in a filter casing 18 with better filtration properties because larger dirt particles will not fit through the gaps formed by the low denier fibers.

In one embodiment, in order to further improve the filtration properties of vacuum filter casing 18, a third fabric layer can be added either in between the nonwoven web 14 and the face fabric 22, or on the back of nonwoven web 14. For instance, a fabric with high permeability and good filtration properties can be used as the third layer. More specifically, in a preferred embodiment, a meltblown nonwoven web is included in the casing.

Meltblown nonwoven webs are typically made by extruding a thermoplastic polymeric material through a dye to form fibers. As the molten polymeric filaments exit the dye, a high pressure fluid, such as heated air or steam attenuates the molten polymer filaments to form fine fibers. Surrounding cool air is then induced into the hot air stream to cool and solidify the fibers. The fibers are then randomly deposited onto a foraminous surface to form a web. The web has integrity as made but may be additionally bonded. Since the fibers contained within meltblown webs are extremely small, the webs provide good filtration properties, while minimizing the pressure drop of a fluid passed through the web.

Fabrics made according to the above described process are well suited for being used as filter casings for vacuum cleaners as shown in Figure 1. The composite fabric casing of the present invention can be used alone or in combination with a conventional paper filter in filtering suction air being circulated through a vacuum cleaner.

These and other modifications and variations to the present invention may be practiced by those of ordinary skill in the art, without departing from the spirit and scope of the present invention, which is more particularly set forth in the appended claims. In addition, it should be understood that aspects of the various embodiments may be interchanged both in whole or in part. Furthermore, those of ordinary skill in the art will appreciate that the foregoing description is by way of example only, and is not intended to limit the invention so further described in such appended claims.

## Claims

1. A molded fabric article suitable for use as a filter casing for vacuum cleaners comprising a nonwoven web formed from polymeric fibers, said polymeric fibers comprising binder fibers present within said nonwoven web in an amount sufficient to make said web moldable when exposed to heat and pressure, said nonwoven web having a permeability of at least 10 cubic feet per minute.

2. A molded fabric article as defined in claim 1, wherein said binder fibers have a softening point below about 350°F.

3. A molded fabric article as defined in claim 1, wherein said binder fibers comprise polyester fibers and are present in said nonwoven web in an amount of at least 20% by weight.

4. A molded fabric article as defined in claim 1, wherein said binder fibers have a denier between about 1.5 and about 15.

5. A molded fabric article as defined in claim 1, wherein said nonwoven web has an air permeability of from about 10 cubic feet per minute to about 35 cubic feet per minute.

6. A molded fabric article as defined in claim 1, wherein said nonwoven web has a basis weight from about 10 to about 30 ounces per square yard.

7. A molded fabric article as defined in claim 1, wherein said nonwoven web is covered with a face fabric.

8. A molded fabric article as defined in claim 1, wherein said binder fibers comprise about 40% to about 60% of said nonwoven web, and wherein said nonwoven web also contains fibers having a higher melting point then said binder fibers, said higher melting point fibers comprising from about 40% to about 60% of said nonwoven web.

9. A molded fabric article as defined in claim 7, further comprising a meltblown nonwoven web positioned in between said face fabric and said nonwoven web containing said binder fibers.

10. A molded fabric article as defined in claim 7, further comprising a meltblown nonwoven web positioned adjacent said nonwoven web opposite said face fabric.

11. A molded fabric article as defined in claim 1, wherein said binder fibers have a softening point below about 240°F.

12. A molded fabric article as defined in claim 1, wherein said binder fibers have a softening point below about 150°F.

13. A molded fabric article as defined in claim 1, wherein said binder fibers have a softening point below about 100°F.

14. A molded fabric filter casing for vacuum cleaners comprising:
a nonwoven web formed from polymeric fibers comprising binder fibers and fibers having a higher melting point than said binder fibers, said binder fibers having a melting point below 350°F and being present within said nonwoven web in an amount sufficient to make said web moldable when exposed to heat and pressure; and
said nonwoven web having a permeability of at least 10 cubic feet per minute, said nonwoven web having a basis weight from about 10 to about 30 ounces per square yard.

15. A molded fabric article as defined in claim 14, wherein said binder fibers comprise polyester fibers.

16. A molded fabric filter casing as defined in claim 14, wherein said polymeric fibers have a denier less than about 15.

17. A molded fabric filter casing as defined in claim 14, wherein said binder fibers comprise from about 40% to about 60% of said nonwoven web.

18. A molded fabric filter casing as defined in claim 14, wherein said nonwoven web has a permeability from about 10 to about 35 cubic feet per minute.

19. A molded fabric filter casing as defined in claim 14, wherein said nonwoven web is covered by a face fabric.

20. A molded fabric filter casing as defined in claim 19, further comprising a meltblown nonwoven web positioned in between said face fabric and said nonwoven web containing said binder fibers.

21. A molded fabric filter casing as defined in claim 19, further comprising a meltblown nonwoven web positioned adjacent said nonwoven web containing said binder fibers opposite said face fabric.

22. A molded fabric filter casing as defined in claim 19, wherein said face fabric comprises a stitch bonded fabric.

23. A molded fabric filter casing as defined in claim 19, wherein said binder fibers have a denier higher than said higher melting point fibers.

24. A molded fabric filter casing as defined in claim 14, wherein said polymeric fibers have a denier of less than about 8.

25. A molded fabric filter casing as defined in claim 14, wherein said binder fibers have a melting point below about 150°F.

26. A molded fabric filter casing as defined in claim 15, wherein said polymeric fibers have a denier of about 6 or less.

27. A process for producing a molded fabric article suitable for use as a filter casing for vacuum cleaners comprising the steps of:
providing a nonwoven web of material containing binder fibers made from a polymer;
heating said nonwoven web to a temperature sufficient to cause said binder fibers to soften; and
molding said heated nonwoven web into the shape of a filter casing.

28. A process as defined in claim 27, wherein said nonwoven web is heated to a temperature of up to about 350°F.

29. A process as defined in claim 27, further comprising the step of laminating a face fabric to said nonwoven web.

30. A process as defined in claim 27, wherein said binder fibers comprise polyester fibers having a melting point of less than about 240°F.

31. A process as defined in claim 27, wherein said nonwoven web further contains fibers having a higher melting point than said binder fibers, said higher melting point fibers being made from a polymer.

32. A process as defined in claim 31, wherein said binder fibers are present within said nonwoven web in an amount from about 40% to about 60% by weight.

33. A process as defined in claim 27, wherein said binder fibers have a denier of less than about 8.

34. A process as defined in claim 27, wherein said molded nonwoven web has a permeability of about 10 cubic feet per minute.

35. A process as defined in claim 34, wherein said nonwoven web has a basis weight of from about 10 ounces per square yard to about 30 ounces per square yard.

36. A process as defined in claim 31, wherein said binder fibers and said higher melting point fibers are made from polyester.
